# EUROPEAN PATENT APPLICATION

(11) **EP 0 725 231 A2**
(43) Date of publication of application: **07.08.1996**
(21) Application number: 96300707.5
(22) Date of filing: 01.02.1996
(51) Int. Cl.: F16H 57/02

(54) **Shaft support and retention**

(30) Priority: 03.02.1995 GB 9502174
(71) Applicant: EATON CORPORATION, Cleveland, Ohio 44114 (US)
(72) Inventor: Ashcroft, Darren Michael, Chorley, Lancashire (GB)
(74) Representative: Clarke, Geoffrey Howard

(57) **Abstract**

An improved shaft support and retention means is provided in which a quill shaft (26) is supported in a journalled hole (22) drilled in an adjacent coaxial shaft (20), said quill shaft being secured by means of adhesive on an area of lesser diameter (38) than the remaining part of the quill shaft nose (28). Improved support means is also provided at the other end of the quill shaft (26) which is provided with a nose journalled into a spigot (40) on a second coaxial and cooperating shaft (18)

## Description

The present invention relates to a shaft support and retention means.

In some gear systems, particularly transmission systems, where there are a plurality of gears all of which intermesh and engage it is known to incorporate a shaft which is supported at only one end and retained in place by various means such as split pins, spring pins or snap rings. Mounted on such shafts are gear wheels, which themselves engage with one or more other gear wheels. The gear wheels may be mounted on the first or quill shaft either by bearing means, bushes or some form of low friction bearing. They are frequently retained by use of snap rings or the like.

In such circumstances it has been found that the gear wheel and the shaft on which it is mounted (such as the quill shaft) are prone to movement. Movement can be both in the axial direction of the shaft and also in a transverse direction. Transverse movement is caused by a number of factors, such as flexing of the shaft; this leads to a number of problems and is not desirable. The results of this movement may manifest itself in terms of a poor shift quality, noisy operation or just premature failure of a shaft or transmission. The present invention is intended to significantly reduce the shaft flexing and axial movements and therefore avoiding the above problem.

According to one aspect of the invention there is provided a compound transmission having a main section, a range section and an auxiliary section, the sections each having a mainshaft, the mainshafts all sharing a common rotational axis, the range section mainshaft being supported at its two ends on a quill shaft, one end of the range mainshaft being supported by bearing means located on the quill shaft, the other end of the range mainshaft supported by bushing means on the quill shaft, the quill shaft having two ends, a first end of which is journalled into the auxiliary section mainshaft in order to support the quill shaft,
the transmission characterized in that the quill shaft is supported at its second end by means of a journalling in the main section mainshaft.

A particular advantage of using a journalling means to support the quill shaft is that the quill shaft is then restrained from flexing and so the range mainshaft is kept in substantially constant alignment, thereby reducing wear and noise in that part of the transmission.

Other known systems use pins which are not tight fining, are prone to fatigue and ultimately fracture thus allowing free movement of the shaft relative to its supporting member.

According to another aspect of the present invention there is provided a compound transmission having a main section, a range section and an auxiliary section, the sections each having a mainshaft, the mainshafts all sharing a common rotational axis, the range section mainshaft being supported upon a quill shaft, the range mainshaft supported at its two ends on the quill shaft, one end of the range mainshaft being supported by bearing means, the other end of the range mainshaft supported by bushing means, the quill shaft having two ends, a first end of which is journalled into the auxiliary section mainshaft in order to support the quill shaft, the transmission characterized in that the first end of the quill shaft has a nose region, which is journalled into the auxiliary section mainshaft said nose region of the quill shaft being of lesser diameter than the other journalled portion of the quill shaft, the quill shaft being secured to the auxiliary section mainshaft by adhesive means, the adhesive being placed on the nose region so as to contact the quill shaft and journalled portion of the auxiliary section mainshaft thereby securing the quill shaft to the auxiliary section mainshaft.

A particular advantage of the use of adhesive for securing the quill shaft is that the shaft does not move axially because it is retained by the adhesive in the receiving area. By use of an area on the nose of the quill shaft of low relief in an otherwise tight fining assembly it is possible to insert the nose of the quill shaft into the drilling in the auxiliary section mainshaft whereupon the adhesive will be retained in the journalled portion and receiving area to provide a means of keeping the two shafts securely fastened together. A further advantage of the invention is also that relative axial movement is prevented, and the component count of the assembly is reduced by one, when compared to other known systems. Additionally the assembly operations are overall simpler because there is no longer a need to drill holes through both the receiving portion and the nose of the shaft, align said holes and then insert a pin.

A further advantage of the present invention is that it minimises movement of the shaft in any transverse direction and minimises flexing and twisting out of an axial alignment. By locating the quill shaft in a bush itself housed in a journalled or inset area of the adjacent mainshaft, it is thus possible to retain the spur gear on the quill shaft without relative movement therebetween, so eliminating the need for a snap ring. By removal of the cantilever effect and improving the level of support of the quill shaft the opportunity for movement in either of the two modes (axial and radial) are significantly reduced. The supporting bushes provide a means of supporting the free end of the shaft and reducing friction between the shafts.

The invention will now be described with reference to the accompanying drawings in which:
Figure 1 shows a general arrangement of a compound transmission as suitable for road vehicles;
Figure 2 shows a prior art system of mounting the quill shaft; and
Figure 3 shows an embodiment of the present invention.

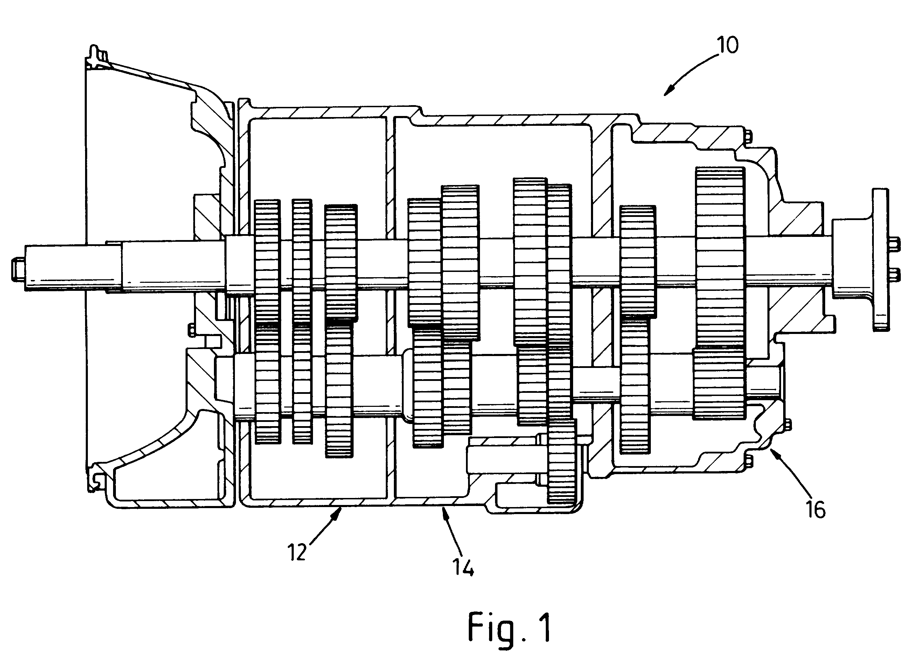

Figure 1 provides a general overview of a compound transmission. The transmission 10 can be conveniently split into three sub-units, a main section 12, an auxiliary section 14 and a range section 16.

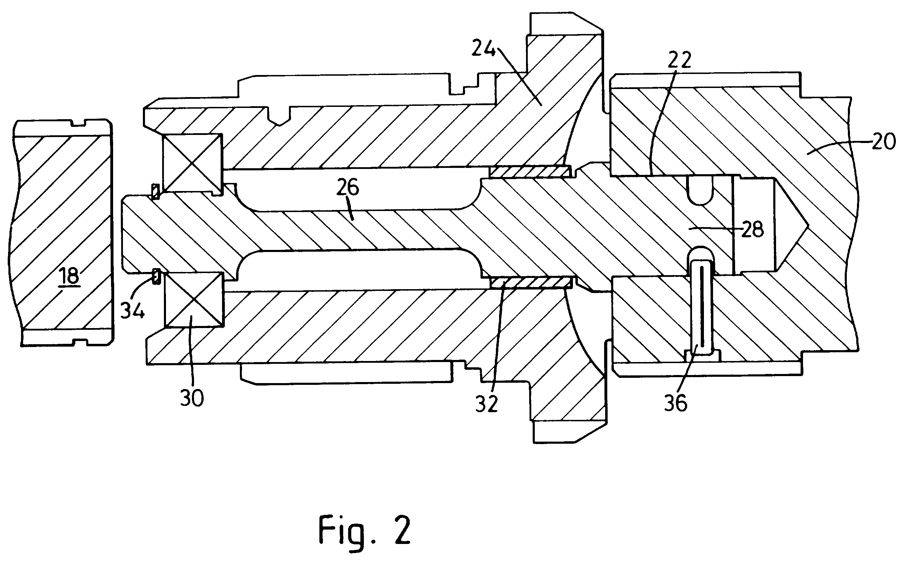

Figure 2 shows an enlarged part of a range section of a transmission, such as that in Figure 1. The mainshaft 18 is located in the main section of the transmission and may intermesh with gears located on one or more countershafts (not shown). An end of the mainshaft is arranged to extend into the auxiliary section of the transmission. An auxiliary section has an auxiliary mainshaft 20 which runs through the auxiliary section of the transmission and carries one or more gears engaging with one or more countershafts, (not shown). The auxiliary mainshaft 20 is drilled or journalled along its axis of rotation to provide a drilling or hole 22. The hole 22 in the auxiliary section mainshaft extends into the range section. The range section mainshaft 24 engages with one or more other gears mounted on one or more countershafts (not shown). The range section mainshaft 24 is itself mounted on a quill shaft 26. The quill shaft has a nose region 28 which protrudes into drilling 22. The quill shaft supports the range mainshaft 24 by bearing means 30 located near one end and a bush means 32 near the other end. The range main shaft could be supported by two sets of bearings, of say roller or ball type or a pair of bushing means. The bearing means 30 is held in place by means of a snap ring 34 which is snapped into place over the end of the quill shaft. The snap ring tends to prevent or minimize the amount of axial movement of the bearing means, and thereby the movement of the range mainshaft in an axial direction. Additional security is provided to retain the quill shaft in place by use of a quill shaft retaining pin 36. The pin 36 is inserted through holes made in the auxiliary mainshaft and quill shaft nose region 28 to lockingly engage the two shafts together. Such pins have been found to fail in practice. There is clearly a limit to the size of the pin which can be used in these circumstances because if the pin is too large the amount of material which needs to be removed from the shafts to accomodate the pin will be such as to significantly weaken the shafts.

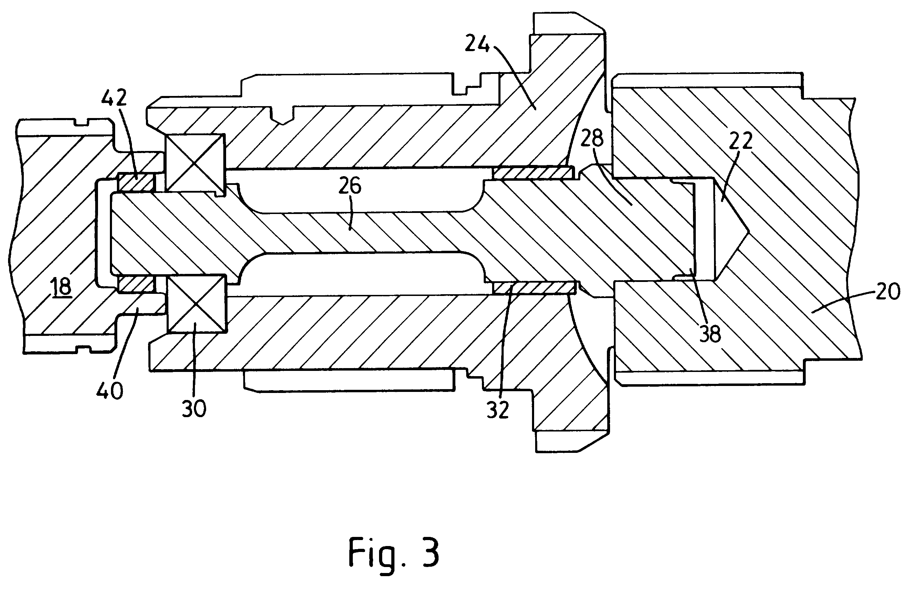

Figure 3 shows embodiments of the present invention. The nose region 28 of the quill shaft 26 is engaged in a receiving hole 22 in the auxiliary mainshaft 20. In this embodiment no retaining pin is used. This is convenient and advantageous because the shafts do not need to be drilled, and so are not weakened by loss of material. The nose region 28 of the quill shaft is provided with an area of lesser diameter than the rest of the nose region. This region of reduced diameter, or nose relief region 38 provides increased clearance between the drilling 22 and quill shaft 26. A covering of adhesive is put on the quill shaft nose relief region 38 in order to glue the two shafts together. Adhesives such as Loctite (trademark) have been used and found to be suitable.

At the other end of the quill shaft is an improved shaft support means. The main section mainshaft 18 is provided with an additional spigot or journal 40 at its end. This additional spigot added to the mainshaft 18 provides a form of journal bearing 40 which reduces the flexing effect movement of the quill shaft 26 due to its cantilevered support. Preferably a low friction bush 42 is interposed between the quill shaft 26 and journalled bearing 40 to reduce any friction between the two shafts, and further reduce the cantilever effect.

An additional advantage of the journal 40 is that it provides a convenient way of retaining the bearing 30 in place without the need for the use of a snap ring, which itself has been found to be prone to become detatched from the quill shaft 26 so allowing the bearing and auxiliary mainshaft to move axially. The provision of the extra journalling clearly allows the mainsection mainshaft to support the quill shaft and thereby significantly reduces the movement which would have been possible as a result of the shaft being cantilevered. A noticeable improvement in shift quality results. It has also been found that there is reduced wear and noise in the transmission.

## Claims

1. A compound transmission (10) having a main section (12), a range section (16) and an auxiliary section (14), the sections each having a mainshaft (18,20,24), the mainshafts all sharing a common rotational axis, the range section mainshaft (24) being supported at its two ends on a quill shaft (26), one end of the range mainshaft (24) being supported by bearing means (30) located on the quill shaft (26), the other end of the range ainshaft supported by bushing means (32) on the quill shaft, the quill shaft having two ends, a first end (28) of which is journalled into the auxiliary section mainshaft (20) in order to support the quill shaft (26),
the transmission characterized in that the quill shaft is supported at its second end by means of a journalling (40) in the main section mainshaft (18).

2. A transmission according to Claim 1 in which the second end of the quill is surrounded by a bush (42) which is located in the main section mainshaft.

3. A compound transmission (10) having a main section (12), a range section (16) and an auxiliary section (14), the sections each having a mainshaft (18,20,24), the mainshafts all sharing a common rotational axis, the range section mainshaft (24) being supported upon a quill shaft (26), the range mainshaft (24) supported at its two ends on the quill shaft (26), one end of the range mainshaft being supported by bearing means (30), the other end of the range mainshaft supported by bushing means (32), the quill shaft having two ends, a first end (28) of which is journalled into the auxiliary section mainshaft (20), in order to support the quill shaft (26), the transmission characterized in that the first end of the quill shaft (26) has a nose region (28), space is journalled into the auxiliary section mainshaft (20) said nose region having a portion of lesser diameter (38) than the other journalled portion of the quill shaft, the quill shaft being secured to the auxiliary section mainshaft (20) by adhesive means, the adhesive being placed on the lesser diameter portion of the nose region (38) so as to contact the quill shaft and journalled portion of the auxiliary section mainshaft, thereby securing the quill shaft to the auxiliary section mainshaft.
